# EUROPÄISCHE PATENTSCHRIFT

(11) **EP 2 084 043 B1**
(45) Veröffentlichungstag und Bekanntmachung des Hinweises auf die Patenterteilung: **14.01.2015**
(21) Anmeldenummer: 07847480.6
(22) Anmeldetag: 28.11.2007
(51) Int. Cl.: B60T 8/1766

(54) **VORRICHTUNG ZUR BESTIMMUNG EINES FAHRZUSTANDES UND VERFAHREN ZUM FAHRZUSTANDABHÄNGIGEN BETRIEB EINER KOMBINIERTEN FAHRZEUGBREMSANLAGE**
DEVICE FOR DETERMINING A DRIVING STATE AND METHOD FOR THE DRIVING-STATE-DEPENDENT OPERATION OF A COMBINED VEHICLE BRAKE SYSTEM
DISPOSITIF DE DÉTERMINATION DE L'ÉTAT D'UN VÉHICULE ET PROCÉDÉ DE GESTION EN FONCTION DE L'ÉTAT DU VÉHICULE D'UNE INSTALLATION COMBINÉE DE FREINAGE DU VÉHICULE

(30) Priorität: 29.11.2006 DE 102006056594; 28.11.2007 DE 102007057605
(43) Veröffentlichungstag der Anmeldung: 05.08.2009
(73) Patentinhaber: Continental Teves AG & Co. OHG, 60488 Frankfurt (DE)
(72) Erfinder: ROLL, Georg, 63150 Heusenstamm (DE); LEIDECK, Jochen, 64283 Darmstadt (DE); CISARZ, Peter, 65719 Hofheim (DE); JÄGER, Jens, 65205 Wiesbanden (DE); LINHOFF, Paul, 61267 Neu-Anspach (DE)
(86) Internationale Anmeldenummer: PCT/EP2007/062963
(87) Internationale Veröffentlichungsnummer: WO 2008/065147

(56) Entgegenhaltungen:
- EP-A- 0 594 860
- DE-A1- 4 124 496
- DE-A1- 10 163 678
- DE-A1- 19 604 134
- US-A- 5 318 355
- US-A1- 2004 046 448
- US-A1- 2004 204 812

## Beschreibung

Die Erfindung betrifft eine Vorrichtung zur Ermittlung eines Fahrzustandes eines zweiachsigen Kraftfahrzeuges, der aus der Fahrsituation des Kraftfahrzeuges und dem Zustand der Fahrbahn gebildet wird, wobei zur Bestimmung der Fahrsituation Ausgangssignale von fahrzeugeigenen Sensoren ausgewertet werden und wobei zur Bestimmung des Zustands der Fahrbahn eine Routine zur Ermittlung und/oder Schätzung des Reibwertes der Fahrbahn vorgesehen ist. Außerdem betrifft die Erfindung ein Verfahren zum Betrieb einer kombinierten Fahrzeugbremsanlage, insbesondere für Kraftfahrzeuge, mit hydraulisch betätigbaren Radbremsen an einer Vorderachse und mit elektromechanisch betätigbaren Radbremsen an einer Hinterachse, wobei die der Hinterachse zugeordneten Fahrzeugräder zumindest zeitweise von einem Elektromotor angetrieben werden, der zur Rekuperation von Bremsenergie als Generator betreibbar ist und im Generatorbetrieb eine Bremskraft an den der Hinterachse zugeordneten Fahrzeugrädern bewirkt, und wobei ein Pedalwegsensor den Fahrerbremswunsch ermittelt und einer Steuer- und Regeleinheit zuführt, die eine Bremskraftverteilung für die hydraulisch betätigbaren Radbremsen, die elektromechanisch betätigbaren Radbremsen und den im Generatorbetrieb betreibbaren Elektromotor durchführt.

Der Zweck derartiger Bremssysteme bei Kraftfahrzeugen besteht darin, als Ergänzung zu einem geeigneten Antrieb zumindest einen Teil der beim Bremsen zurückgewonnenen Energie im Fahrzeug zu speichern und für den Antrieb des Fahrzeuges wiederzuverwenden. Dadurch kann der Energiebedarf des Fahrzeuges insgesamt gesenkt, der Wirkungsgrad erhöht und der Betrieb damit wirtschaftlicher gestaltet werden.

Bei der eingangs genannten kombinierten Bremsanlage sind ein Paar hydraulischer Reibbremsen für die Abbremsung der Vorderachs-Räder sowie ein Paar elektromechanisch betätigbarer Reibbremsen für die Abbremsung der Hinterachs-Räder, wie sie aus gewöhnlichen Kraftfahrzeugen bekannt sind, und ein Elektromotor eingesetzt, der auch als Generator betreibbar ist. Über den Generator bzw. den sich im Generatorbetrieb befindlichen Elektromotor wird zumindest ein Teil der gesamten Bremskraft aufgebracht. Die gewonnene elektrische Energie wird in ein Speichermedium wie beispielsweise eine Bordbatterie ein- bzw. zurückgespeist und für den Antrieb des Kraftfahrzeuges über eine geeignete Antriebseinheit wiederverwendet.

Zur Abbremsung eines derartigen Kraftfahrzeuges, das einen Elektromotor als alleinigen oder zusätzlichen Antrieb aufweist, der im Generatorbetrieb zur Rückgewinnung von Bremsenergie verwendet werden kann, wird zusätzlich zum Bremsmoment der hydraulisch und elektromechanisch betätigbaren Radbremsen, das durch das Fahrerbetätigte Bremssystem aufgebracht wird, ein weiteres Bremsmoment vom Elektromotor aufgebracht. Dieses Bremsmoment des Elektromotors entsteht aus dem bekannten Effekt bei Elektromotoren, die bei mechanischem Antreiben ohne Zuführung von elektrischem Strom als Dynamo bzw. Generator wirken und elektrischen Strom generieren. Dabei entsteht eine Gegenkraft, die dem mechanischen Antrieb entgegenwirkt und im vorliegenden Fall als Bremsmoment wirkt. Der als Generator betriebene Elektromotor wirkt daher als Bremse. Die gesamte durch den Fahrer unmittelbar einleitbare Bremskraft des Kraftfahrzeugs setzt sich daher aus der Bremskraft der hydraulisch betätigbaren Radbremsen, der Bremskraft der elektromechanisch betätigbaren Radbremsen und der Bremskraft des als Generator wirkenden Elektromotors zusammen.

Die DE 196 04 134 A1 offenbart ein Verfahren und eine Vorrichtung zur Steuerung der Bremsanlage von Kraftfahrzeugen mit elektrischem Antrieb, bei welchem eine regenerative Abbremsung über den wenigstens einen Antriebsmotor des Fahrzeugs sowie eine Abbremsung über eine Reibungsbremse erfolgt, wobei der Bremswunsch des Fahrers durch ein Steuergerät erfasst und in einem ersten Bremswunschbereich das Bremsmoment hauptsächlich von der regenerativen Abbremsung aufgebracht wird. Es ist vorgesehen, dass die Reibungsbremse derart gesteuert wird, dass der durch die Bremspedalbetätigung des Fahrers erzeugte Druck in diesem ersten Bereich keine nennenswerte Bremswirkung in der Reibungsbremse zumindest an den Antriebsrädern erzeugt.

Aus der WO 99/46139 sind ein Verfahren und eine Vorrichtung zum statischen oder dynamischen Ermitteln von Sollwerten für Bremskräfte bekannt, wobei nach Maßgabe des Verzögerungswunsches entweder der Sollwert für die elektrisch-regenerative Bremse größtmöglich gemacht wird oder die Sollwerte für die elektrisch-regenerative Bremse und für die Reibbremse primär nach Maßgabe von Kriterien, betreffend die Bremskraftverteilung an den Achsen, eingestellt werden. Dabei kann der Sollwert für die elektrisch-regenerative Bremse nach Maßgabe der Drehzahl des Elektromotors oder nach Maßgabe des Ladezustands der Batterie vorgegeben werden. Eine fahrzustandsabhängige Bremskraftverteilung ist dagegen nicht vorgesehen.

Aus der Theorie der Fahrdynamik ist zudem bekannt, dass ein Fahrzeug mit überbremster Hinterachse zu fahrdynamischer Instabilität neigt.

Es ist daher Aufgabe der vorliegenden Erfindung, eine Vorrichtung und ein Verfahren darzustellen, das den Fahrzustand des Kraftfahrzeugs ermittelt und die Bremskraftverteilung adaptiert, sodass eine Verbesserung des Energierückgewinnungspotenzials bei gleichzeitig sichergestellter Stabilität des Fahrzeugs erzielbar ist.

Diese Aufgabe wird erfindungsgemäß durch eine Vorrichtung gemäß Anspruch 1 gelöst.

Die Vorrichtung zur Ermittlung eines Fahrzustandes gibt einen Zahlenwert aus, der ein Maß für eine Verteilung der Bremskraft zwischen der Vorder- und der Hinterachse des Kraftfahrzeugs ist.

Zur Konkretisierung des erfindungsgemäßen Verfahrens ist vorgesehen, dass der Zahlenwert zwischen 0 und 100 beträgt und den prozentualen Anteil eines vorgesehenen Maximalwerts der Bremskraft an der Hinterachse vorgibt.

Die Bestimmung der Fahrsituation wird mit Hilfe von fahrzeugeigenen Sensoren und mit Hilfe von externen Informationen durchgeführt. Dabei ist vorgesehen, dass die fahrzeugeigenen Sensoren den Lenkwinkel einer Fahrzeuglenkung, die Querbeschleunigung und/oder die Gierrate des Kraftfahrzeugs, die Fahrzeuggeschwindigkeit, den Pedalweg eines Bremspedal und/oder eines Fahrpedals, das Antriebsmoment eines Antriebsmotors und die äußeren Umweltbedingungen wie Außentemperatur und Niederschlag erfassen. Darüber hinaus sind weitere Sensoren zur Umfelderfassung vorgesehen. Die externen Informationen werden von einem Navigationssystem, einem Wetter- und Umweltdatenübermittlungsdienst und/oder durch Kommunikation mit anderen Kraftfahrzeugen zur Verfügung gestellt.

Die vorliegende Aufgabe wird ferner durch ein Verfahren gemäß Anspruch 7 gelöst.

Der Fahrzustand des Kraftfahrzeugs wird ermittelt und ein Zahlenwert bestimmt, der ein Maß für eine Verteilung der Bremskraft zwischen der Vorder- und der Hinterachse des Kraftfahrzeugs ist.

Bei einer besonders vorteilhaften Weiterbildung des erfindungsgemäßen Verfahrens ist vorgesehen, dass der Zahlenwert zwischen 0 und 100 beträgt und den prozentualen Anteil der Bremskraft an der Hinterachse vorgibt, wobei der Anteil der Bremskraft an den Fahrzeugrädern der Hinterachse im Bereich geringer Verzögerungen ausschließlich oder nahezu ausschließlich durch den sich im Generatorbetrieb befindlichen Elektromotor erzeugt wird. Dagegen wird bei mittleren oder größeren Verzögerungen aus Gründen der Fahrzeugstabilität nicht ausschließlich oder nahezu ausschließlich an den Fahrzeugrädern der Hinterachse gebremst sondern der Anteil der Bremskraft an den Fahrzeugrädern der Hinterachse wird maximal im Sinne der Rekuperation von Bremsenergie unter Berücksichtigung der Fahrstabilität gewählt.

Bei einer weiteren vorteilhaften Weiterbildung des erfindungsgemäßen Verfahrens ist vorgesehen, dass zur Stabilisierung des Kraftfahrzeugs in kritischen Fahrsituationen die Bremskraft an den Fahrzeugrädern der Hinterachse asymmetrisch verteilt wird. Dabei ist vorgesehen, dass das kurvenäußere Fahrzeugrad der Hinterachse stärker abgebremst wird als das kurveninnere Fahrzeugrad der Hinterachse, um das Kraftfahrzeug beim Durchfahren einer Kurve zu stabilisieren.

Die Erfindung wird nachfolgend anhand eines Ausführungsbeispiels im Zusammenhang mit der beiliegenden Zeichnung näher erläutert. In der Zeichnung zeigen:
- Fig. 1: ein schematisch dargestellter Schaltplan einer kombinierten Fahrzeugbremsanlage mit hydraulisch betätigbaren Radbremsen an der Vorderachse, elektromechanisch betätigbaren Radbremsen an der Hinterachse und einem Elektromotor für rekuperative Bremsungen;
- Fig. 2: eine Bremskraftverteilung nach dem erfindungsgemäßen Verfahren mit rekuperativem Bremsen und
- Fig. 3: ein Ablaufdiagramm zur Ermittlung des Fahrzustandes.

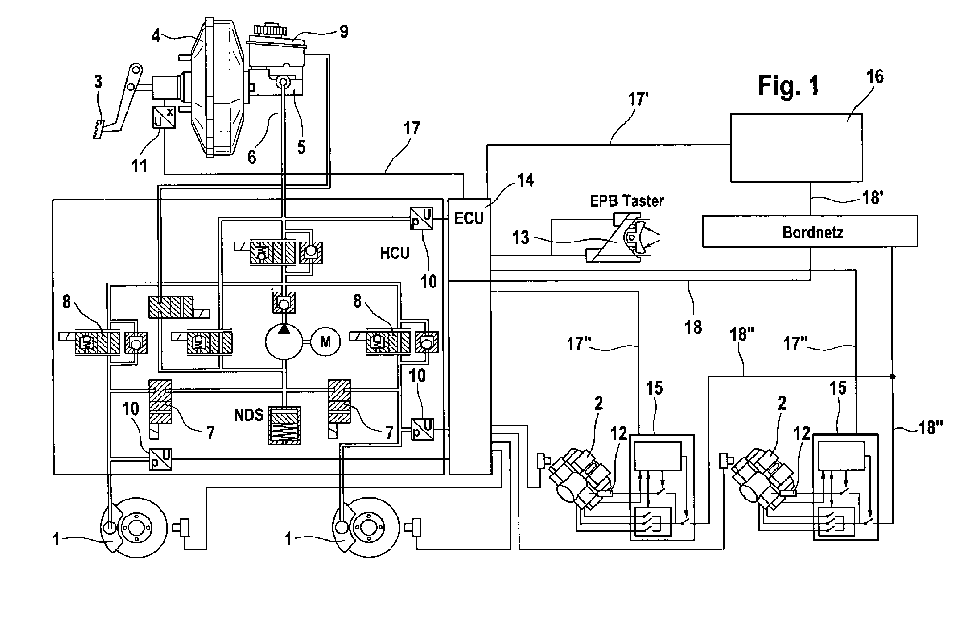

Ein Schaltplan der Fahrzeugbremsanlage, an der das vorliegende Verfahren durchführbar ist, ist in Fig. 1 dargestellt. Die Fahrzeugbremsanlage weist einerseits hydraulisch betätigbare Radbremsen 1 und andererseits elektromechanisch betätigbare Radbremsen 2 auf. Die hydraulisch betätigbaren Radbremsen 1 sind an einer ersten Achse des Kraftfahrzeugs, der Vorderachse, angeordnet und werden mit Hilfe eines pedalbetätigten Vakuum-Bremskraftverstärker 4 mit nachgeschaltetem Hauptbremszylinder 5 mit hydraulischem Druckmittel beaufschlagt. Zu diesem Zweck sind die hydraulisch betätigbaren Radbremsen 1 unter Zwischenschaltung von Einlassventilen 8 über eine Hydraulikleitung 6 mit dem Hauptbremszylinder 5 verbunden. Bei einem Druckabbau wird das eingesteuerte Druckmittel über Auslassventile 7 in einen drucklosen Druckmittelvorratsbehälter 9 abgelassen. Zur Ermittlung des eingesteuerten hydraulischen Drucks und zur Durchführung von Regelvorgängen, wie etwa Blockierschutzregelungen, sind mehrere Drucksensoren 10 vorgesehen, deren Ausgangssignale einer zentralen Steuer- und Regeleinheit 14 zugeführt werden.

Wie Fig. 1 weiterhin entnehmbar ist, sind an einer zweiten Achse, der Hinterachse des Kraftfahrzeugs, elektromechanisch betätigbare Radbremsen 2 angeordnet, die nach Maßgabe des in den hydraulisch betätigbaren Radbremsen 1 eingesteuerten hydraulischen Drucks betätigbar sind. Wie bereits erwähnt, wird der in die hydraulisch betätigbaren Radbremsen 1 eingesteuerte Druck mit Hilfe der Drucksensoren 10 ermittelt. Auf Grundlage dieses Druckwertes werden die elektromechanisch betätigbaren Radbremsen 2 an der Hinterachse angesteuert, d.h. unter Berücksichtigung einer Bremskraftverteilungsfunktion zwischen Vorder- und Hinterachse wird eine Zuspannkraft der elektromechanisch betätigbaren Radbremsen 2 eingestellt. Außerdem können die elektromechanisch betätigbaren Radbremsen 2 nach Maßgabe des Betätigungsweges des Bremspedals 3, das bedeutet gemäß dem Wunsch des Fahrzeugführers, angesteuert werden. Dazu wird der Betätigungsweg des Bremspedals 3 mit Hilfe eines Pedalwegsensors 11 ermittelt. Die Ansteuerung der elektromechanisch betätigbaren Radbremsen 2 wird dezentral durch zwei elektronische Steuereinheiten 15 vorgenommen, die je einer elektromechanisch betätigbaren Radbremse 2 zugeordnet sind. Die Versorgung mit elektrischer Energie wird über eine Versorgungsleitung 18", welche die elektromechanisch betätigbaren Radbremsen 2 mit dem Bordnetz verbindet, durchgeführt.

Wie in Fig.1 schematisch angedeutet ist, weisen die elektromechanisch betätigbaren Radbremsen 2 eine Feststellbremsvorrichtung 12 auf, mit der die Radbremsen zur Durchführung einer Feststellbremsung im zugespannten Zustand verriegelbar sind. Die Feststellbremsvorrichtung 12 ist mit Hilfe eines Bedienelementes 13 ansteuerbar. Das Bedienelement 13 ist als Taster ausgebildet und weist drei Schaltstellungen für die Befehle "Spannen", "Neutral" und "Lösen" auf, wobei lediglich die mittlere Neutralstellung eine stabile Schaltstellung darstellt.

Der Fahrerbremswunsch wird, wie bereits erwähnt, auch von dem Pedalwegsensor 11 sensiert und über eine Signalleitung 17 der elektronischen Steuer- und Regeleinheit 14 zugeführt. Der Steuer- und Regeleinheit 14 werden außerdem die Signale des Bedienelements 13 der Feststellbremse zugeführt. Die beiden dezentralen elektronischen Steuereinheiten 15 der elektromechanisch betätigbaren Radbremsen 2 sind ebenfalls über eine Signalleitung 17" mit der Steuer- und Regeleinheit 14 verbunden.

Ein Elektromotor 16, der einerseits als alleiniger Antrieb bei einem Elektroauto oder als zusätzlicher Antrieb bei einem Fahrzeug mit Verbrennungsmotor wirkt und andererseits im Generatorbetrieb zur Rückgewinnung von Bremsenergie eingesetzt wird, ist über eine weitere Signalleitung 17' mit der Steuer- und Regeleinheit 14 verbunden. Der Elektromotor 16 bezieht seine Versorgungsspannung im Antriebsfall über eine Versorgungsleitung 18' aus dem Bordnetz und speist über dieselbe Versorgungsleitung 18' im Generatorbetrieb elektrische Energie in das Bordnetz zurück. Im eben erwähnten Generatorbetrieb wirkt der Elektromotor 16 als Dynamo und generiert über eine erzeugte Spannung einen elektrischen Strom. Dabei entsteht eine Gegenkraft, die als ein weiteres Bremsmoment wirkt. Der als Generator betriebene Elektromotor 16 wirkt daher als Bremse. Die gesamte Bremskraft des Kraftfahrzeugs setzt sich somit aus der Bremskraft der hydraulisch betätigbaren Radbremsen 1, der Bremskraft der elektromechanisch betätigbaren Radbremsen 2 und der Bremskraft des als Generator wirkenden Elektromotors 16 zusammen. Diese drei möglichen Bremskräfte müssen in einer geeigneten Art und Weise angepasst werden, was durch eine geeignete Bremskraftverteilung ermöglicht wird.

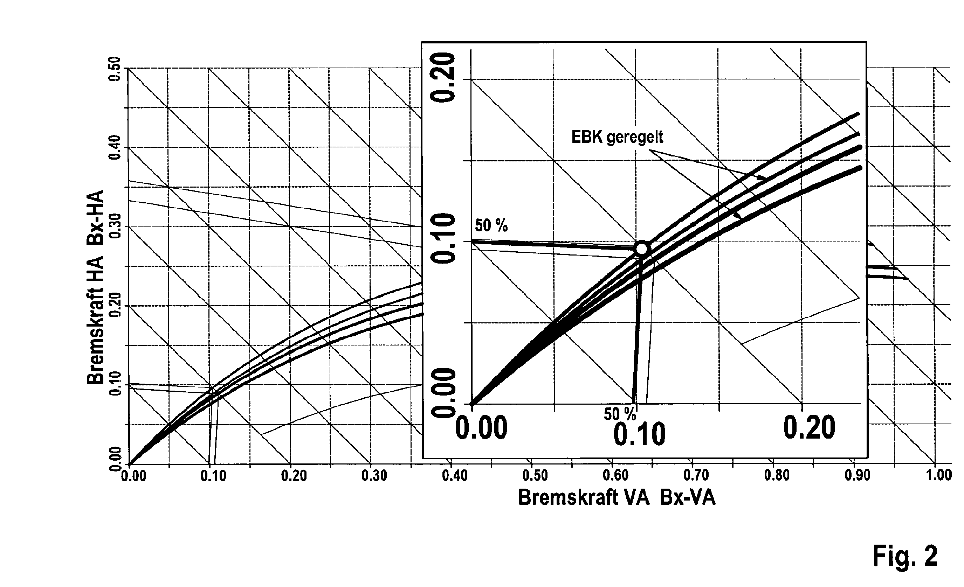

Bei der in Fig. 2 dargestellten Bremskraftverteilung sind auf der Ordinate die Bremskraft an der Hinterachse - kurz auch HA - und auf der Abszisse die Bremskraft an der Vorderachse - kurz auch VA - aufgetragen. In Fig. 2 ist eine Bremskraftverteilung dargestellt, wie sie bei einer anhand von Fig. 1 beschrieben kombinierten Fahrzeugbremsanlage mit hydraulisch betätigbaren Radbremsen 1 an der Vorderachse und elektromechanisch betätigbaren Radbremsen 2 an der Hinterachse vorgesehen ist. Die Bremskraftverteilung sieht eine sogenannte 50/50-Aufteilung vor, d.h. dass 50% der Bremskraft für das gesamte Fahrzeug von den hydraulisch betätigbaren Radbremsen 1 der Vorderachse und 50% der Gesamt-Bremskraft von den elektromechanischen Radbremsen 2 der Hinterachse aufgebracht werden. Im Rekuperationsmodus stellen die elektromechanisch betätigbaren Radbremsen 2 allerdings keine Bremskraft zur Verfügung, sondern die Bremskraft wird durch den als Generator betriebenen Elektromotor 16 erzeugt. Das Potenzial der Bremsenergie-Rückgewinnung liegt daher im Bereich niedriger Bremskräfte bei der eben genannten Bremskraftverteilung des statischen Fahrzeuggewicht von 50%/50% bei entsprechenden 50% der Bremsenergie.

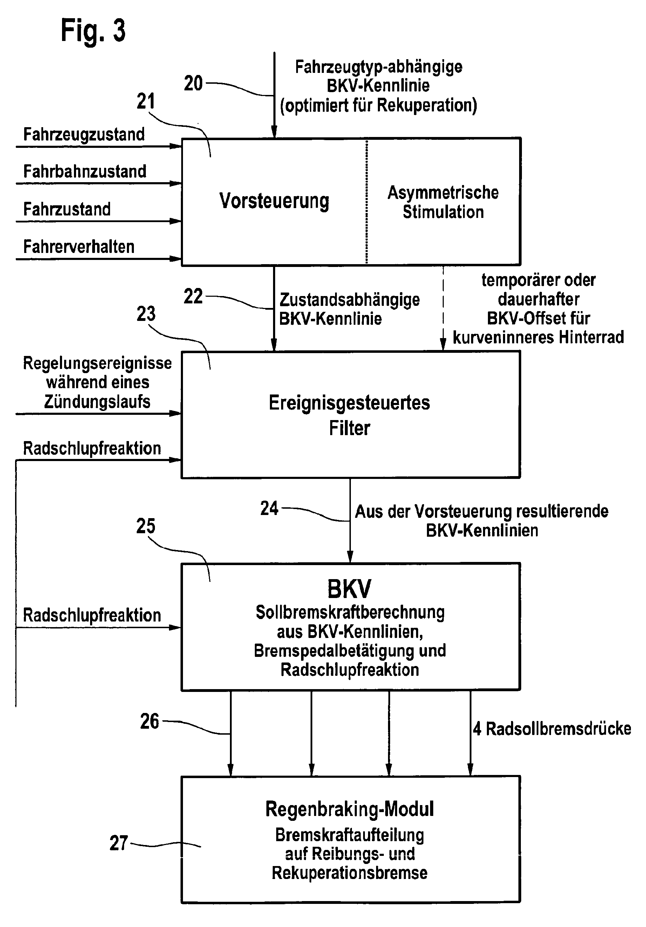

Generell ist man bestrebt, ausgehend von der in Fig. 3 beschriebenen Bremskraftverteilung, das Bremsenergierückgewinnungspotenzial zu erhöhen. Dazu wird im Bereich geringer Fahrzeugverzögerungen die Bremskraftverteilung so geändert, dass der Anteil der Bremskraft an den Fahrzeugrädern der Hinterachse größer als der Anteil der Bremskraft an den Fahrzeugrädern der Vorderachse ist. Da, wie bereits beschrieben, die Bremskraft an den Fahrzeugrädern der Hinterachse im rekuperativen Modus ausschließlich über den Generator erzeugt wird, das heißt, da der Anteil der Bremskraft an den Fahrzeugrädern der Hinterachse bei nicht vollständig geladener Batterie ausschließlich oder nahezu ausschließlich durch den sich im Generatorbetrieb befindlichen Elektromotor 16 erzeugt wird, erhöht sich die zurück gewonnene Bremsenergie deutlich. Für den unteren Verzögerungsbereich wird es für möglich und zulässig gehalten, den Anteil der Bremskraft an der Hinterachse relativ zur Vorderachse stark zu erhöhen. Damit es hierbei jedoch nicht zu instabilen Zuständen kommt, sieht das vorliegende Verfahren vor, dass die Bremskraft in Abhängigkeit des ermittelten Fahrzustands des Kraftfahrzeugs verteilt wird, dass also die Bremskraftverteilung an den Fahrzustand des Kraftfahrzeugs angepasst wird.

Zu diesem Zweck ist eine Vorrichtung zur Ermittlung eines Fahrzustandes vorgesehen. Der Fahrzustand setzt sich aus der Fahrsituation des Kraftfahrzeuges und dem Zustand der Fahrbahn zusammen. Zur Bestimmung der Fahrsituation werden Ausgangssignale von fahrzeugeigenen Sensoren ausgewertet und zur Bestimmung des Zustands der Fahrbahn ist eine Routine zur Ermittlung oder Schätzung des Reibwertes µ der Fahrbahn vorgesehen. Diese Vorrichtung zur Ermittlung eines Fahrzustandes gibt einen Zahlenwert aus, der ein Maß für eine Verteilung der Bremskraft zwischen der Vorder- und der Hinterachse des Kraftfahrzeugs ist. Dieser Zahlenwert gibt den prozentualen Anteil der Bremskraft an der Hinterachse vor, der gemäß einer fest eingestellten Bremskraftverteilung realisiert wird, das heißt, beträgt der Zahlenwert 100, so wird 100% der laut statischer Bremskraftverteilung einzustellenden Bremskraft für das gesamte Fahrzeug von den Bremseinrichtungen an der Hinterachse, also vom im Generatorbetrieb betriebenen Elektromotor und gegebenenfalls von den elektromechanisch betätigbaren Radbremsen 2 übernommen.

Zur Bestimmung der Fahrsituation des Kraftfahrzeugs werden der Lenkwinkel, die Querbeschleunigung und die Gierrate ermittelt, um eine Kurvenfahrt des Kraftfahrzeugs zu erkennen. Die Fahrsituationserkennung betrachtet außerdem die Fahrzeuggeschwindigkeit und die maßgeblichen Umweltbedingungen wie Außentemperatur, Niederschlag, Wind, Nebel und Tau. Dies kann auch durch eine Umfeld- und Bilderkennung oder durch eine Auswertung der Luftmassenmessung erfolgen.

Neben der Fahrsituation ist der Zustand der Fahrbahn ein Bestandteil des Fahrzustandes. Die Fahrbahneigenschaften werden erkannt durch Eigenregelung oder sonstige Informationen aus Fahrzeugsensoren. Auch eine Meldung durch Warndienste und Wetterdienste wird in der Erkennung des Fahrbahnzustandes berücksichtigt. Darüber hinaus werden durch interne und externe Positionsgeber und Kartendaten oder durch Kommunikation mit anderen Kraftfahrzeugen spezielle örtliche Gegebenheiten wie Autobahnbrücken, Waldschneisen, enge Kurven oder besondere Fahrsituationen wie Glatteis erkannt.

Darüber hinaus kann ein Fahrerprofil erstellt werden und in die Ermittlung des Fahrzustands einfließen. Gleiches gilt für die Erkennung einer Schlechtwegsituation durch fahrzeugfremde oder fahrzeugeigene Mittel. Die Hangneigung in Quer- und Längsrichtung wird genauso zur Fahrzustandsermittlung ausgewertet wie die gemessenen Achslasten. Der Reifendruck, eine Reifencharaktererkennung zur Erkennung von Sommer-, Winter- und Ganzjahresreifen sowie eine Notraderkennung fügen weitere Erkenntnisse zur Ermittlung des Fahrzustandes bei.

Alle genannten Informationen werden, so weit verfügbar, zur Ermittlung des Fahrzustandes des Kraftfahrzeugs verwendet und ein Zahlenwert bestimmt, der ein Maß für eine Verteilung der Bremskraft zwischen der Vorder- und der Hinterachse des Kraftfahrzeugs ist, sodass ein sogenanntes Überbremsen der Hinterachse und das Entstehen von unsicheren Fahrzuständen verhindert wird und gleichzeitig das maximal mögliche Energierückgewinnungspotenzial während einer Rekuperationsbremsung ausgenutzt wird. Dabei ist beispielsweise zur Stabilisierung des Kraftfahrzeugs in kritischen Fahrsituationen vorgesehen, die Bremskraft an den Fahrzeugrädern der Hinterachse asymmetrisch zu verteilen. Durch die gezielte Asymmetrie der Reibwertausnutzung an den Hinterrädern in Abhängigkeit von Fahrzeug-, Fahrzustands-, und Fahrbahnzustands-Parametern wird das kurvenäußere Fahrzeugrad der Hinterachse stärker abgebremst als das kurveninnere Fahrzeugrad der Hinterachse und das Kraftfahrzeug wird beim Durchfahren einer Kurve stabilisiert.

Der Ablauf der Fahrzustandserkennung und die daraus veränderte Bremskraftverteilung sind in Fig. 3 dargestellt: Zunächst wird im Verfahrensschritt 20 die Ermittlung der fahrzeugtypabhängigen Bremskraftverteilungs-Kennlinie aufgerufen. In der Vorsteuerung 21 werden, wie oben bereits ausgeführt wurde, der Fahrzustand und der Zustand der Fahrbahn berücksichtigt. Außerdem werden der Fahrzeugzustand und das Fahrerverhalten in der Vorsteuerung verarbeitet. Als Ergebnis wird im Verfahrensschritt 22 eine zustandsabhängige Kennlinie für die Bremskraftverteilung ausgegeben. Diese Kennlinie für die Bremskraftverteilung wird in einem Filter 23 auf ihre Verträglichkeit mit den Regelungsereignissen während eines Zündungslaufes und mit den Radschlupfreaktionen hin geprüft. Nach dieser Überprüfung geht die resultierende Kennlinie im Verfahrensschritt 24 an das BKV-Modul 25 über, das aus der resultierenden Kennlinie für die Bremskraftverteilung die Sollbremskraftberechnung vornimmt und insgesamt vier Sollbremskräfte für die vier Fahrzeugräder vorgibt (Verfahrensschritt 26). Das Modul 27 ist als Rekuperationsbremsungs-Modul für die Bremskraftaufteilung auf Reibungs- und Rekuperationsbremse zuständig und nimmt die Aufteilung entsprechend der Vorgabe vor, dass das Energierückgewinnungspotenzial ausgeschöpft wird.

### Bezugszeichenliste

- 1: hydraulisch betätigbare Radbremsen
- 2: elektromechanisch betätigbare Radbremsen
- 3: Bremspedal
- 4: Bremskraftverstärker
- 5: Hauptbremszylinder
- 6: hydraulische Leitung
- 7: Auslassventile
- 8: Einlassventile
- 9: Druckmittelvorratsbehälter
- 10: Drucksensor
- 11: Pedalwegsensor
- 12: Feststellbremsvorrichtung
- 13: Bedienelement
- 14: Steuer- und Regeleinheit
- 15: Steuereinheit
- 16: Elektromotor
- 17: Signalleitung
- 18: Versorgungsleitung

## Patentansprüche

1. Vorrichtung zur Ermittlung eines Fahrzustandes eines zweiachsigen Kraftfahrzeuges, der aus der Fahrsituation des Kraftfahrzeuges und dem Zustand der Fahrbahn gebildet wird, wobei zur Bestimmung der Fahrsituation Ausgangssignale von fahrzeugeigenen Sensoren ausgewertet werden und wobei zur Bestimmung des Zustands der Fahrbahn eine Routine zur Ermittlung und/oder Schätzung des Reibwertes (µ) der Fahrbahn vorgesehen ist, **dadurch gekennzeichnet, dass** das Kraftfahrzeug eine kombinierte Fahrzeugbremsanlage umfasst mit hydraulisch betätigbaren Radbremsen (1) an einer Vorderachse und mit elektromechanisch betätigbaren Radbremsen (2) an einer Hinterachse, wobei die der Hinterachse zugeordneten Fahrzeugräder zumindest zeitweise von einem Elektromotor (16) angetrieben werden, der zur Rekuperation von Bremsenergie als Generator betreibbar ist und im Generatorbetrieb eine Bremskraft an den der Hinterachse zugeordneten Fahrzeugrädern bewirkt, und mit einem Pedalwegsensor (11), der den Fahrerbremswunsch ermittelt und einer Steuer- und Regeleinheit (14) zuführt, die eine Bremskraftverteilung für die hydraulisch betätigbaren Radbremsen (1), die elektromechanisch betätigbaren Radbremsen (2) und den im Generatorbetrieb betreibbaren Elektromotor (16) durchführt, und dass die Vorrichtung zur Ermittlung eines Fahrzustandes einen Zahlenwert in Abhängigkeit des ermittelten Fahrzustandes bestimmt und ausgibt, der ein Maß für eine Verteilung der Bremskraft zwischen der Vorder- und der Hinterachse des Kraftfahrzeugs ist.

2. Vorrichtung nach Anspruch 1, **dadurch gekennzeichnet, dass** der Zahlenwert zwischen 0 und 100 beträgt und den prozentualen Anteil eines vorgesehenen Maximalwerts der Bremskraft an der Hinterachse vorgibt.

3. Vorrichtung nach Anspruch 1 oder 2, **dadurch gekennzeichnet, dass** die Bestimmung der Fahrsituation mit Hilfe von fahrzeugeigenen Sensoren und mit Hilfe von externen Informationen durchgeführt wird.

4. Vorrichtung nach Anspruch 3, **dadurch gekennzeichnet, dass** die fahrzeugeigenen Sensoren den Lenkwinkel einer Fahrzeuglenkung, die Querbeschleunigung und/oder die Gierrate des Kraftfahrzeugs, die Fahrzeuggeschwindigkeit, den Pedalweg eines Bremspedal und/oder eines Fahrpedals, das Antriebsmoment eines Antriebsmotors und die äußeren Umweltbedingungen wie Außentemperatur und Niederschlag erfassen.

5. Vorrichtung nach Anspruch 4, **dadurch gekennzeichnet, dass** weitere Sensoren zur Umfelderfassung vorgesehen sind mit mindestens einem Element aus der Gruppe Radar, Lidar, optische Kamera oder Infrarot.

6. Vorrichtung nach einem der Ansprüche 3 bis 5, **dadurch gekennzeichnet, dass** die externen Informationen von einem Navigationssystem, einem Wetter- und Umweltdatenübermittlungsdienst und/oder durch Kommunikation mit anderen Kraftfahrzeugen zur Verfügung gestellt werden.

7. Verfahren zum Betrieb einer kombinierten Fahrzeugbremsanlage für Kraftfahrzeuge mit hydraulisch betätigbaren Radbremsen (1) an einer Vorderachse und mit elektromechanisch betätigbaren Radbremsen (2) an einer Hinterachse, wobei die der Hinterachse zugeordneten Fahrzeugräder zumindest zeitweise von einem Elektromotor (16) angetrieben werden, der zur Rekuperation von Bremsenergie als Generator betreibbar ist und im Generatorbetrieb eine Bremskraft an den der Hinterachse zugeordneten Fahrzeugrädern bewirkt, und wobei ein Pedalwegsensor (11) den Fahrerbremswunsch ermittelt und einer Steuer- und Regeleinheit (14) zuführt, die eine Bremskraftverteilung für die hydraulisch betätigbaren Radbremsen (1), die elektromechanisch betätigbaren Radbremsen (2) und den im Generatorbetrieb betreibbaren Elektromotor (16) durchführt, **dadurch gekennzeichnet, dass** der Fahrzustand des Kraftfahrzeugs ermittelt wird, wobei der Fahrzustand aus der Fahrsituation des Kraftfahrzeuges und dem Zustand der Fahrbahn gebildet wird, wobei zur Bestimmung der Fahrsituation Ausgangssignale von fahrzeugeigenen Sensoren ausgewertet werden und wobei zur Bestimmung des Zustands der Fahrbahn eine Routine zur Ermittlung und/oder Schätzung des Reibwertes (µ) der Fahrbahn vorgesehen ist, und ein Zahlenwert in Abhängigkeit des ermittelten Fahrzustandes bestimmt wird, der ein Maß für eine Verteilung der Bremskraft zwischen der Vorder- und der Hinterachse des Kraftfahrzeugs ist.

8. Verfahren nach Anspruch 7, **dadurch gekennzeichnet, dass** der Zahlenwert zwischen 0 und 100 beträgt und den prozentualen Anteil der Bremskraft an der Hinterachse vorgibt, wobei der Anteil der Bremskraft an den Fahrzeugrädern der Hinterachse im Bereich geringer Verzögerungen ausschließlich oder nahezu ausschließlich durch den sich im Generatorbetrieb befindlichen Elektromotor (16) erzeugt wird.

9. Verfahren nach Anspruch 7 oder 8, **dadurch gekennzeichnet, dass** zur Stabilisierung des Kraftfahrzeugs in kritischen Fahrsituationen die Bremskraft an den Fahrzeugrädern der Hinterachse asymmetrisch verteilt wird.

10. Verfahren nach Anspruch 9, **dadurch gekennzeichnet, dass** das kurvenäußere Fahrzeugrad der Hinterachse stärker abgebremst wird als das kurveninnere Fahrzeugrad der Hinterachse, um das Kraftfahrzeug beim Durchfahren einer Kurve zu stabilisieren.

## Claims

1. Device for detecting a driving state of a two-axle motor vehicle, which driving state is formed from the driving situation of the motor vehicle and the state of the underlying surface, wherein output signals from vehicle on-board sensors are evaluated in order to determine the driving situation, and wherein a routine for detecting and/or estimating the coefficient of friction (µ) of the underlying surface is provided in order to determine the state of the underlying surface, **characterized in that** the motor vehicle comprises a combined vehicle brake system having hydraulically activated wheel brakes (1) on a front axle and having electromechanically activated wheel brakes (2) on a rear axle, wherein the vehicle wheels which are assigned to the rear axle are driven at least temporarily by an electric motor (16) which can be operated as a generator in order to recover braking energy, and in the generator mode brings about a braking force at the vehicle wheels which are assigned to the rear axle, and having a pedal travel sensor (11) which detects the driver's braking request and feeds it to an open-loop and closed-loop control unit (14) which distributes the braking force for the hydraulically activated wheel brakes (1), the electromechanically activated wheel brakes (2) and the electric motor (16) which can be operated in the generator mode, and **in that** the device for detecting a driving state determines and outputs a numerical value, as a function of the detected driving state which numerical value is a measure of the distribution of the braking force between the front axle and the rear axle of the motor vehicle.

2. Device according to Claim 1, **characterized in that** the numerical value is between 0 and 100 and it predefines the percental portion of a provided maximum value of the braking force at the rear axle.

3. Device according to Claim 1 or 2, **characterized in that** the determination of the driving situation is carried out using vehicle on-board sensors and using external information.

4. Device according to Claim 3, **characterized in that** the vehicle on-board sensors sense the steering angle of a vehicle steering system, the lateral acceleration and/or the yaw rate of the motor vehicle, the velocity of the vehicle, the pedal travel of a brake pedal and/or of an accelerator pedal, the drive torque of a drive engine and the external environmental conditions such as external temperature and precipitation.

5. Device according to Claim 4, **characterized in that** further sensors are provided for sensing the surroundings, having at least one element from the group radar, lidar, optical camera or infrared.

6. Device according to one of Claims 3 to 5, **characterized in that** the external information is made available by a navigation system, a weather and environmental data transmission service and/or by communication with other motor vehicles.

7. Method for operating a combined vehicle brake system for motor vehicles, having hydraulically activated wheel brakes (1) on a front axle and having electromechanically activated wheel brakes (2) on a rear axle, wherein the vehicle wheels which are assigned to the rear axle are driven at least temporarily by an electric motor (16) which can be operated as a generator in order to recover braking energy, and in the generator mode brings about a braking force at the vehicle wheels which are assigned to the rear axle, and wherein a pedal travel sensor (11) detects the driver's braking request and feeds it to an open-loop and closed-loop control unit (14) which distributes the braking force for the hydraulically activated wheel brakes (1), the electromechanically activated wheel brakes (2) and the electric motor (16) which can be operated in the generator mode, **characterized in that** the driving state of the motor vehicle is detected, wherein the driving state is formed from the driving situation of the motor vehicle and the state of the underlying surface, wherein output signals from vehicle on-board sensors are evaluated in order to determine the driving situation, and wherein a routine for detecting and/or estimating the coefficient of friction (µ) of the underlying surface is provided in order to determine the state of the underlying surface, and a numerical value is determined as a function of the detected driving state which is a measure of the distribution of the braking force between the front axle and the rear axle of the motor vehicle is determined.

8. Method according to Claim 7, **characterized in that** the numerical value is between 0 and 100 and it predefines the percental portion of the braking force at the rear axle, wherein the portion of the braking force at the vehicle wheels of the rear axle in the region of low decelerations is generated exclusively or virtually exclusively by the electric motor (16) which is in the generator mode.

9. Method according to Claim 7 or 8, **characterized in that**, in order to stabilize the motor vehicle in critical driving situations, the braking force at the vehicle wheels of the rear axle is distributed asymmetrically.

10. Method according to Claim 9, **characterized in that** the vehicle wheel on the outside of a bend on the rear axle is braked to a greater extent than the vehicle wheel on the inside of the bend on the rear axle in order to stabilize the motor vehicle when it travels through a bend.

## Revendications

1. Ensemble destiné à déterminer l'état de roulage d'un véhicule automobile à deux essieux,
l'état de roulage étant formé de la situation de roulage du véhicule automobile et de l'état de la chaussée,
des signaux d'entrée provenant de capteurs propres au véhicule étant évalués pour déterminer la situation de roulage et une routine de détermination et/ou d'estimation du coefficient de frottement (µ) de la chaussée étant prévue pour déterminer l'état de la chaussée,
**caractérisé en ce que**
le véhicule automobile comporte une installation combinée de freinage de véhicule dotée de freins (1) de roue actionnés hydrauliquement sur l'essieu avant et de freins (2) de roue actionnés électromécaniquement sur l'essieu arrière, les roues du véhicule situées sur l'essieu arrière étant entraînées au moins en partie par un moteur électrique (16) qui peut être utilisé en génératrice pour récupérer l'énergie de freinage et qui a pour effet d'appliquer une force de freinage sur les roues du véhicule disposées sur l'essieu arrière lorsqu'il fonctionne en génératrice, et un capteur (11) de course de pédale qui détermine le souhait de freinage du conducteur et l'amène à une unité (14) de commande et de régulation qui exécute une répartition de la force de freinage des freins (1) de roue actionnés hydrauliquement, des freins (2) de roue actionnés électromécaniquement et du moteur électrique (16) utilisé en génératrice et
**en ce que** l'ensemble de détermination de l'état de roulage détermine et délivre une valeur numérique qui dépend de l'état de roulage déterminé, cette valeur étant une mesure de la répartition de la force de freinage entre l'essieu avant et l'essieu arrière du véhicule automobile.

2. Ensemble selon la revendication 1, **caractérisé en ce que** la valeur numérique est comprise entre 0 et 100 et indique le pourcentage de la valeur maximale prévue de la force de freinage sur l'essieu arrière.

3. Ensemble selon les revendications 1 ou 2, **caractérisé en ce que** la détermination de la situation de roulage est réalisée à l'aide de capteurs propres au véhicule et à l'aide d'information externes.

4. Ensemble selon la revendication 3, **caractérisé en ce que** les capteurs propres au véhicule détectent l'angle de braquage de la direction du véhicule, l'accélération transversale et/ou la vitesse de lacet du véhicule automobile, la vitesse du véhicule, la course de la pédale de frein et/ou de la pédale d'accélérateur, le couple d'entraînement du moteur d'entraînement et les conditions d'environnement extérieur, par exemple la température extérieure et les précipitations.

5. Ensemble selon la revendication 4, **caractérisé en ce que** d'autres capteurs saisissant l'environnement sont prévus, et présentent au moins un élément sélectionné dans l'ensemble des radars, des lidars, des caméras optiques ou des caméras infrarouges.

6. Ensemble selon l'une des revendications 3 à 5, **caractérisé en ce que** les informations externes sont délivrées par un système de navigation, un service de transmission de données météorologiques et d'environnement et/ou par communication avec d'autres véhicules automobiles.

7. Procédé de conduite d'une installation combinée de freinage de véhicule pour véhicules automobiles comprenant
des freins (1) de roue actionnés hydrauliquement sur l'essieu avant et des freins (2) de roue actionnés électromécaniquement sur l'essieu arrière, les roues du véhicule associées à l'essieu arrière étant entraînées au moins une partie du temps par un moteur électrique (16) qui peut être utilisé en génératrice pour récupérer l'énergie de freinage et qui exerce lorsqu'il fonctionne en génératrice une force de freinage sur les roues du véhicule associées à l'essieu arrière,
un capteur (11) de course de pédale déterminant le souhait de freinage du conducteur et l'amenant à une unité (14) de commande et de régulation qui exécute une répartition à la force de freinage entre les freins (1) de roue actionnés hydrauliquement, les freins (2) de roue actionnés électromécaniquement et le moteur électrique (16) utilisé en génératrice,
**caractérisé en ce que**
l'état de roulage du véhicule automobile est déterminé, l'état de roulage étant formé de la situation de roulage du véhicule automobile et de l'état de la chaussée, des signaux de sortie de capteurs propres au véhicule étant évalués pour déterminer la situation de roulage et une routine de détermination et/ou d'estimation du coefficient de frottement (µ) de la chaussée étant prévue pour déterminer l'état de la chaussée, une valeur numérique qui est une mesure de la répartition de la force de freinage entre l'essieu avant et l'essieu arrière du véhicule automobile étant déterminée en fonction de l'état de roulage ainsi déterminé.

8. Procédé selon la revendication 7, **caractérisé en ce que** la valeur numérique est comprise entre 0 et 100 et indique le pourcentage de la valeur maximale prévue de la force de freinage sur l'essieu arrière, la partie de la force de freinage appliquée sur les roues de l'essieu arrière du véhicule étant formée pour les petits ralentissements exclusivement ou presque exclusivement par le moteur électrique (16) fonctionnant en génératrice.

9. Procédé selon les revendications 7 ou 8, **caractérisé en ce que** pour stabiliser le véhicule automobile dans des situations critiques de roulage, la force de freinage exercée sur les roues de l'essieu arrière du véhicule étant répartie de manière asymétrique.

10. Procédé selon la revendication 9, **caractérisé en ce que** la roue de l'essieu arrière du véhicule située à l'extérieur d'une courbe est freinée davantage que la roue de l'essieu arrière du véhicule située à l'intérieur de la courbe, pour stabiliser le véhicule automobile lorsqu'il se déplace en virage.
